# EUROPÄISCHE PATENTSCHRIFT

(11) **EP 0 774 607 B1**
(45) Veröffentlichungstag und Bekanntmachung des Hinweises auf die Patenterteilung: **23.04.2003**
(21) Anmeldenummer: 96117729.2
(22) Anmeldetag: 06.11.1996
(51) Int. Cl.: F16K 17/04

(54) **Anschluss an eine Pumpe**
Pump connector
Connexion de pompe

(30) Priorität: 18.11.1995 DE 19543085
(43) Veröffentlichungstag der Anmeldung: 21.05.1997
(73) Patentinhaber: LuK Automobiltechnik GmbH & Co. KG, 42499 Hückeswagen (DE)
(72) Erfinder: Schenck, Kai Sebastian Hellmut, D-42857 Remscheid (DE)
(74) Vertreter: Gleiss, Alf-Olav, Dr.jur. Dipl.-Ing.

(56) Entgegenhaltungen:
- DE-A- 2 165 179
- DE-B- 1 065 240
- DE-C- 378 953
- US-A- 1 934 758
- US-A- 3 375 839
- US-A- 4 089 623
- US-A- 4 243 064
- US-A- 5 322 217

## Beschreibung

Die Erfindung betrifft einen Anschluß für mindestens zwei Verbraucher an eine Pumpe.

Die Druckschriften US-A-1,934,758, DE-A-10 65 240 und US-A-4,243, 064 offenbaren jeweils einen Anschluß für zwei Verbraucher an eine Pumpe, mit einem von dem gegebenen Druck in der von der Pumpe zum ersten Verbraucher führbaren ersten Versorgungsleitung steuerbaren Schaltorgan, das mit einer zweiten Versorgungsleitung für den zweiten Verbraucher in Wirkverbindung bringbar ist, entsprechend Oberbegriff des Anspruchs 1.

Es ist Aufgabe der Erfindung, einen Anschluß für mindestens zwei Verbraucher an einer Pumpe zu schaffen, der kompakt ausgebildet ist.

Diese Aufgabe wird mit Hilfe eines Anschlusses gelöst, der die in Anspruch 1 genannten Merkmale aufweist. Der erfinderische Anschluß zeichnet sich durch ein kompakt ausgebildetes Schaltorgan aus, das von dem in der ersten Versorgungsleitung zum ersten Verbraucher gegebenen Druck gesteuert wird und den zweiten Verbraucher ab einem vorbestimmten Druck mit der Pumpe verbindet. Es ist also möglich, den ersten Verbraucher, einen Hauptverbraucher, unmittelbar nach Anlaufen der Pumpe zu versorgen. Der zweite Verbraucher, der Nebenverbraucher, wird erst erst mit der Pumpe verbunden, wenn ein vorgegebenes Druckniveau für den ersten Verbraucher aufgebaut ist. Es ist auch sichergestellt, daß die Versorgung des Nebenverbrauchers unterbrochen wird, falls das für den Hauptverbraucher bereitgestellte Druckniveau aufgrund eines hohen Verbrauchs nicht mehr aufrechterhalten werden kann.

Bevorzugt wird ein Ausführungsbeispiel eines Anschlusses, der sich dadurch auszeichnet, daß das Schaltorgan eine mit der ersten Versorgungsleitung zusammenwirkende, druckabhängig bewegliche Schaltfläche aufweist, die über ein Kopplungsglied ein Schaltelement öffnet und schließt, durch das der zweite Verbraucher mit der Pumpe verbunden oder von dieser getrennt wird.

Besonders bevorzugt wird ein Ausführungsbeispiel eines Anschlusses, der sich dadurch auszeichnet, daß das Schaltelement so ausgebildet ist, daß die Schaltfläche in der Ruhelage des Schaltelements von dem in der zweiten Versorgungsleitung gegebenen Druck nicht beaufschlagt wird. Bei einer derartigen Ausgestaltung können Rückwirkungen des Drucks in der zum zweiten Verbraucher führenden Leitung auf das Schaltverhalten des Schaltorgans vermieden werden.

Weitere Ausgestaltungen ergeben sich aus den übrigen Unteransprüchen.

Die Erfindung wird im folgenden anhand der Zeichnung näher erläutert. Es zeigen:
- Figur 1: ein erstes Ausführungsbeispiel eines Anschlusses für mit Unterdruck beaufschlagbare Verbraucher im Längsschnitt;
- Figur 2: ein zweites Ausführungsbeispiel eines Anschlusses für mit Überdruck beaufschlagbare Verbraucher im Längsschnitt und
- Figur 3: einen Teilschnitt durch ein drittes Ausführungsbeispiel eines rückwirkungsfreien Anschlusses.

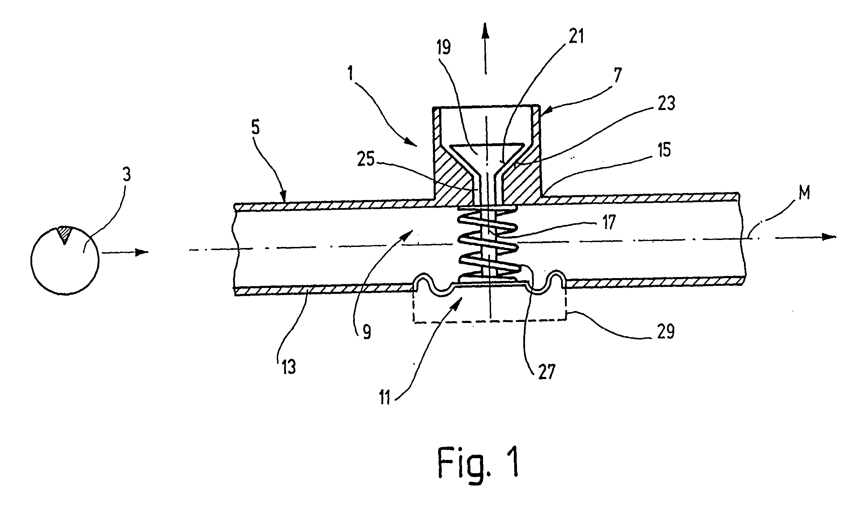

Figur 1 zeigt einen Anschluß 1, über den zwei Verbraucher an eine Pumpe 3 anschließbar sind. Eine erste Versorgungsleitung 5 führt zum ersten Verbraucher, der im folgenden als Hauptverbraucher angesehen wird. Eine zweite Versorgungsleitung 7 führt zu einem zweiten hier als Nebenverbraucher eingestuften Verbraucher.

Die zweite Versorgungsleitung 7 ist hier rechtwinklig mit der ersten Versorgungsleitung 5 verbunden. Die Art der Verbindung ist frei wählbar. Es ist also beispielsweise möglich die beiden Leitungen miteinander zu verschweißen oder zu verschrauben.

Im Bereich der Verbindung der beiden Versorgungsleitungen ist ein Schaltorgan 9 vorgesehen, mit dessen Hilfe die zweite Versorgungsleitung 7 druckabhängig mit der ersten Versorgungsleitung 5, das heißt mit der Pumpe 3, verbunden wird.

Das Schaltorgan 9 umfaßt eine mit der ersten Versorgungsleitung 5 zusammenwirkende, druckabhängig bewegliche Schaltfläche 11, die in der Wandung 13 der ersten Versorgungsleitung 5 gegenüber der Verbindungsstelle 15 der beiden Versorgungsleitungen 5 und 7 angeordnet und mit dem in der ersten Versorgungsleitung gegebenen Druck beaufschlagbar ist.

Die Schaltfläche ist als druckabhängig bewegliche Membran ausgebildet, die fest mit einem Kopplungsglied 17 verbunden ist und über dieses auf ein Schaltelement 19 wirkt. Das Schaltelement 19 ist so ausgebildet, daß es die Verbindung der zweiten Versorgungsleitung 7 zur ersten Versorgungsleitung 5 druckabhängig steuert, das heißt öffnet und schließt. Das Schaltelement 19 weist hier eine in Richtung des Kopplungsgliedes 17 weisende konische Verschlußfläche 21 auf, die mit einer konischen Anlagefläche 23 zusammenwirkt, die nahe der Verbindungsstelle 15 im Inneren der Versorgungsleitung 7 vorgesehen ist.

Die zweite Versorgungsleitung 7 steht über einen Verbindungskanal 25 mit der ersten Versorgungsleitung 5 in Verbindung, der von dem Kopplungsglied 17 durchdrungen und in der Schließstellung des Schaltelements 19 verschlossen wird.

Mit dem Schaltelement 19 wirkt ein Rückstellelement 27 zusammen, welches eine elastische Vorspannkraft auf das Schaltelement 19 ausübt und dieses in seine Ruhelage drängt. Das Rückstellelement 27 ist hier als Schraubenfeder ausgebildet, die, ebenso wie das Kopplungsglied 17, im Inneren der ersten Versorgungsleitung 15 angeordnet ist.

Figur 1 zeigt, daß die als Membran ausgebildete Schaltfläche 11 durch eine geeignete Schutzvorrichtung, beispielsweise durch ein Sieb 29, vor Beschädigungen geschützt werden kann.

Die Verschlußfläche 21 und die Anlagefläche 23 schließen einen Winkel ein, dessen Öffnung von der ersten Versorgungsleitung 5 weggerichtet ist. Zur Vermeidung einer Selbsthemmung wird ein stumpfer Öffnungswinkel bevorzugt.

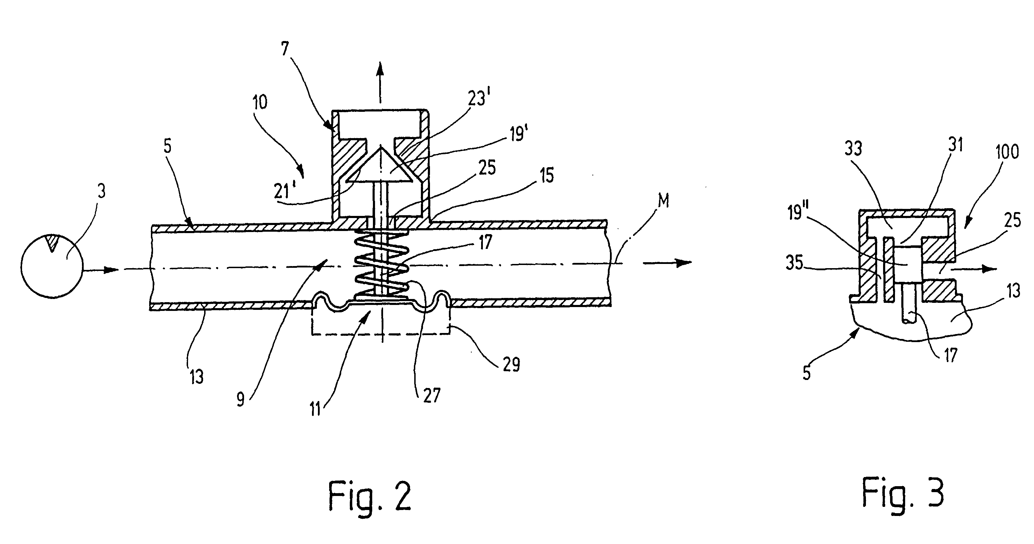

Figur 2 zeigt ein weiteres Ausführungsbeispiel eines Anschlusses 10, der die gleichen Teile aufweist, wie sie anhand von Figur 1 bereits erläutert wurden. Für alle übereinstimmenden Teile wurden gleiche Bezugsziffern verwendet, so daß auf deren Beschreibung verzichtet werden kann.

Der Anschluß 10 weist ein Schaltelement 19' und eine Verschlußfläche 21' auf, die mit einer Anlagefläche 23' zusammenwirkt. Der Verschlußkegel des Schaltelements 19' ist hier allerdings mit seiner stumpfen Seite mit dem Kopplungsglied 17 verbunden und nicht mit seiner spitzen Seite. Entsprechend öffnet sich der Öffnungswinkel der Anlagefläche 23 in Richtung zur ersten Versorgungsleitung 5.

Das Schaltelement 19' wird über die bewegliche Schaltfläche 11, die in der Wandung 13 der ersten Versorgungsleitung 5 angeordnet ist in eine Öffnungs- und Schließstellung verlagert, wobei zwischen Schaltelement 19 und Schaltfläche 11 durch das Kopplungsglied 17 eine starre Verbindung gewährleistet ist. Im geöffneten Zustand besteht eine Fluidverbindung der zweiten Versorgungsleitung 2 zur ersten Versorgungsleitung 1 über einen Verbindungskanal 25, durch den das Kopplungsglied 17 verläuft. Es zeigt sich, daß der Durchmesser des Verbindungskanals 25 dem Innendurchmesser der zweiten Versorgungsleitung 7 entsprechen kann.

Im folgenden soll auf die Funktion der in den Figuren 1 und 2 dargestellten Anschlußvarianten eingegangen werden:

Die Ruhelage des Schaltorgans 9 wird so gewählt, daß die Verbindung zur zweiten Versorgungsleitung 7 unterbrochen ist, wenn die Pumpe 3 anläuft und wenn der gewünschte Druck in der ersten Versorgungsleitung 5 noch nicht aufgebaut ist. Erst wenn das gewünschte Druckniveau erreicht ist, soll das Schaltelement 19 beziehungsweise 19' die Verbindung zwischen Pumpe 3 beziehungsweise erster Versorgungsleitung 5 und der zweiten Versorgungsleitung 7 freigeben. Figur 1 zeigt eine Variante eines Anschlusses 1, der die Verbindung zu einem Nebenverbraucher über die zweite Versorgungsleitung 7 erst dann freigibt, wenn die Pumpe 3 in der ersten Versorgungsleitung 5 zum ersten Verbraucher beziehungsweise zum Hauptverbraucher einen gewissen Unterdruck aufgebaut hat. Durch den Unterdruck wird die druckabhängig bewegliche Schaltfläche 11 gegen die Vorspannungskraft des Rückstellelements 27 nach innen in Richtung zur Mittelachse M der ersten Versorgungsleitung 5 ausgelenkt. Dadurch wird auch das Kopplungsglied 17 nach oben verlagert, so daß das Schaltelement 19 beziehungsweise seine Verschlußfläche 21 von der Anlagefläche 23 abgehoben wird. Dadurch wird eine Fluidverbindung zwischen der zweiten Versorgungsleitung und der ersten Versorgungsleitung 5 beziehungsweise zur Pumpe 7 freigegeben, so daß diese über den Verbindungskanal 25 einen Unterdruck für den zweiten Verbraucher zur Verfügung stellen kann.

Die Vorspannkraft des Rückstellelements 27 ist so gewählt und auf die Größe der Schaltfläche 11 abgestimmt, daß das Schaltelement 19 erst bei einem bestimmten Unterdruck in der ersten Versorgungsleitung 5 geöffnet werden kann, also erst dann, wenn ein gewünschter Unterdruck beim Hauptverbraucher sichergestellt ist.

Das Ausführungsbeispiel des Anschlusses 10 in Figur 2 ist entsprechend für eine Pumpe 3 ausgebildet, die über die Versorgungsleitungen 5 und 7 zwei Verbraucher, einen an der ersten Versorgungsleitung 5 angeschlossen Hauptverbraucher und einen Nebenverbraucher mit Überdruck versorgt.

Figur 2 zeigt den Anschluß 10 in seiner Arbeitsstellung, in der die Verbindung zwischen der Pumpe 3 beziehungsweise der ersten Versorgungsleitung 5 zur zweiten Versorgungsleitung 7 freigegeben ist. Das Schaltelement 19' befindet sich also in einer Stellung, in der seine Verschlußfläche 21' von der Anlagefläche 23 gegen die Wirkung des Rückstellelements 27 abgehoben ist.

In den Figuren 1 und 2 ist also das Schaltelement 19 beziehungsweise 19' gegen die Kraft des Rückstellelements 27 aus seiner Ruhelage heraus, in der die Verbindung zwischen den Versorgungsleitungen geschlossen ist, in seine abgehobene Arbeits- beziehungsweise Öffnungsstellung verlagert.

Beiden Ausführungsbeispielen ist gemeinsam, daß die Schaltfläche 11 aufgrund der starren Kopplung mit dem Schaltelement 19 beziehungsweise 19' über das Kopplungsglied 17 auch mit dem Druck beaufschlagt wird, der in der zweiten Versorgungsleitung 7 gegeben ist. Es ergibt sich also insoweit eine Rückwirkung der in der zweiten Versorgungsleitung 7 gegebenen Druckverhältnisse auf das Öffnungs- und Schließverhalten des Schaltorgans 9.

Figur 3 zeigt ein weiteres Ausführungsbeispiel eines Anschlusses 100 im Teilschnitt. Es ist hier lediglich ein Teil der Wandung 13 der ersten Versorgungsleitung 5 wiedergegeben. Die Schaltfläche 11 und das Rückstellelement 27 sind weggelassen. Es wird insoweit auf die Darstellungen und die Beschreibung zu den Figuren 1 und 2 verwiesen. Das Schaltelement 19'' ist hier zylindrisch ausgebildet. Es ist in einer als zylindrische Bohrung ausgebildeten Führung 31 untergebracht, deren Mittelachse konzentrisch zu der des Kopplungsgliedes 17 verläuft und senkrecht auf der Mittelachse M der ersten Versorgungsleitung 5 steht. Bei dem hier dargestellten Ausführungsbeispiel des Ausschlusses 100 ist der Verbindungskanal 25, der zu der hier nicht dargestellten zweiten Versorgungsleitung 7 führt quer zur Führung 31 angeordnet. Er wird durch das Schaltelement 19'' in der Ruhelage des Schaltelements, die in Figur 3 dargestellt ist, verschlossen. Die Führung 31 und der Verbindungskanal 25 sind als zwei senkrecht aufeinander stehende Bohrungen ausgebildet. Ein im Verbindungskanal 25 herrschender Druck wirkt quer auf das Schaltelement 19'' und drückt dieses gegen die Wandung der Führung 31. Dabei entstehen -anders als bei den Ausführungsvarianten gemäß Figur 1 und 2- keinerlei Kraftelemente, die in Richtung des Kopplungsgliedes 17 wirken. Ein Druck, der also im Verbindungskanal 25 beziehungsweise in der zweiten Versorgungsleitung 7 herrscht, kann damit in der Ruhelage des Schaltelements 19'' nicht auf die Schaltfläche 11 wirken, die mit dem Druck in der ersten Versorgungsleitung 5 beaufschlagt wird. Durch die abgewandelte Ausführungsform des Anschlusses 100 wird also eine Rückwirkung der in der zweiten Versorgungsleitung 7 herrschenden Druckwerte auf das Schaltverhalten des Schaltorgans 9 verhindert.

Die in Figur 3 dargestellte Ausführungsform des Anschlusses 100 kann sowohl für Vakuum- als auch für Förderpumpen verwendet werden. Wesentlich ist, daß das Schaltelement 19'' über das Kopplungsglied 17 so mit der Schaltfläche 11 des Schaltorgans 9 verbunden ist, daß es in seiner in Figur 3 dargestellten Ruheposition den Verbindungskanal zwischen der ersten Versorgungsleitung 5 und der zweiten Versorgungsleitung 7 abschließt. Bewegt sich, wie bei Figur 1, die Schaltfläche 11 bei einem Unterdruck nach oben, so wird auch das Schaltelement 19'' über das Kopplungsglied 17 nach oben bewegt, so daß eine Verbindung zwischen der zur ersten Versorgungsleitung 5 offenen Führung 31 und dem Verbindungskanal 25 gegeben ist.

Wird bei der Ausführungsform des Anschlusses 100 die Schaltfläche 11 mit einem Überdruck beaufschlagt, so bewegt sich diese von der Mittellinie M weg und zieht damit das Kopplungsglied 17 nach unten. Dies ergibt sich bereits aus den Erläuterungen zu Figur 2. Bei einer derartigen druckbedingten Bewegung der Schaltfläche 11 bewegt sich auch das Kopplungsglied 17 nach unten und zieht das Schaltelement 19'' ebenfalls nach unten. Dadurch wird schließlich eine Verbindung zwischen dem Verbindungskanal 25 und der Führung 31 hergestellt. Gemäß Figur 3 ist oberhalb des Schaltelements 19'' ein Versorgungsraum 33 vorgesehen, der über einen Versorgungskanal 35 mit der ersten Versorgungsleitung 1 in Verbindung steht. Ein von der ersten Versorgungsleitung 5 über den Versorgungskanal 35 in den Versorgungsraum 33 gefördertes Fluid kann nunmehr über die Führung 31 in den Verbindungskanal 25 gelangen und von dort zur zweiten Versorgungsleitung 7. Wird also das Schaltelement 19'' aus seiner in Figur 3 wiedergegebenen Ruhelage nach unten bewegt, wird ein von der Pumpe 3 an die erste Versorgungsleitung 5 abgegebenes Fluid schließlich über den Versorgungskanal 35, den Versorgungsraum 33 und den Verbindungskanal 25 zur zweiten Versorgungsleitung 7 gefördert.

Allen Ausführungsbeispielen ist gemeinsam, daß der hier als Nebenverbraucher bezeichnete zweite Verbraucher erst ab einem bestimmten Druck in der ersten Versorgungsleitung 5 von der Pumpe 3 versorgt werden muß. Diese kann also eine geringere Leistungsaufnahme aufweisen und wesentlich kleiner ausgebildet werden, als bei herkömmlichen Lösungen. Auf jeden Fall ist bereits während des Anlaufs der Pumpe die Versorgung des Hauptverbrauchers sichergestellt, so daß insofern keine Sicherheitsnachteile eintreten können. Sollte im laufenden Betrieb der Pumpe aufgrund eines hohen Verbrauchs eines oder beider Verbraucher ein bestimmtes Druckniveau nicht mehr aufrechtzuerhalten sein, wird der Nebenverbraucher an der Pumpe abgekoppelt und nur noch der Hauptverbraucher versorgt.

Aus dem oben Gesagten wird deutlich, daß über den hier beschriebenen Anschluß bei entsprechender Ausbildung des Schaltorgans auch mehr als ein Nebenverbraucher druckabhängig zu- oder aufgesteuert werden kann. Es ist auch ersichtlich, daß der hier beschriebene Anschluß auch innerhalb einer Pumpe angeordnet sein kann, also mit Leitungen innerhalb des Pumpengehäuses zusammenwirkt; er kann auch integraler Bestandteil der Pumpe sein, so daß sich eine sehr kompakte Bauform ergibt.

## Patentansprüche

1. Anschluß für mindestens zwei Verbraucher an eine Pumpe (3), mit einem von dem gegebenen Druck in der von der Pumpe (3) zum ersten Verbraucher führbaren ersten Versorgungsleitung (5) steuerbaren Schaltorgan (9), das mit einer zweiten Versorgungsleitung (7) für den zweiten Verbraucher in Wirkverbindung bringbar ist, **dadurch gekennzeichnet, dass** mittels des Schaltorgans (9) die zweite Versorgungsleitung (7) ab einem bestimmten Druck in der ersten Versorgungsleitung (5) zu- oder aufsteuerbar ist und eine Schaltfläche (11) in der Wandung (13) der ersten Versorgungsleitung (5) angeordnet ist und mit dem Druck in der ersten Versorgungsleitung (5) beaufschlagbar ist.

2. Anschluß nach Anspruch 1, **dadurch gekennzeichnet, daß** das Schaltorgan (9) eine mit der ersten Versorgungsleitung (5) zusammenwirkende, druckabhängig bewegliche Schaltfläche (11), ein mit der Schaltfläche (11) zusammenwirkendes Kopplungsglied (17) und ein über das Kopplungsglied (17) betätigbares Schaltelement (19;19';19'') aufweist, das die zweite Versorgungsleitung (7) zum zweiten Verbraucher öffnet und schließt.

3. Anschluß nach Anspruch 1 oder 2, **gekennzeichnet durch** ein mit dem Schaltelement (19;19';19'') zusammenwirkendes Rückstellelement (27).

4. Anschluß nach einem der vorhergehenden Ansprüche, **dadurch gekennzeichnet, daß** er innerhalb der Pumpe (3) angeordnet und/oder in diese integriert ist.

5. Anschluß nach einem der vorhergehenden Ansprüche, **dadurch gekennzeichnet, daß** das Kopplungsglied (17) an der Schaltfläche (11) angebracht ist.

6. Anschluß nach einem der vorhergehenden Ansprüche, **dadurch gekennzeichnet, daß** die zweite Versorgungsleitung (7) von der ersten Versorgungsleitung (5) abzweigt, daß die Schaltfläche (11) im Bereich der Abzweigung und das Schaltelement (19;19';19'') in der zweiten Versorgungsleitung (7) angeordnet sind.

7. Anschluß nach einem der vorhergehenden Ansprüche, **dadurch gekennzeichnet, daß** das Schaltelement (19") so ausgebildet ist, daß die Schaltfläche (11) in der Ruhelage des Schaltelements (19") von dem in der zweiten Versorgungsleitung (7) gegebenen Druck nicht beaufschlagt wird.

8. Anschluß nach einem der vorhergehenden Ansprüche, **dadurch gekennzeichnet, daß** die Pumpe (3) als Vakuumpumpe einsetzbar ist und daß das Schaltelement (19;19'') so ausgebildet ist, daß es erst ab einem vorbestimmten Unterdruck in der ersten Versorgungsleitung (5) öffnet.

9. Anschluß nach einem der Ansprüche 1 bis 7, **dadurch gekennzeichnet, daß** die Pumpe (3) als Förderpumpe einsetzbar ist und daß das Schaltelement (19';19'') so ausgebildet ist, daß es erst ab einem vorbestimmten Überdruck in der ersten Versorgungsleitung (5) öffnet.

## Claims

1. Connection for at least two consumers on one pump (3) comprising a switching member (9) which can be controlled by the prevailing pressure in the first supply line (5) which can lead from the pump (3) to the first consumer, which member (9) can be induced to interact with a second supply line (7) for the second consumer, **characterised in that** above a certain pressure in the first supply line (5) the second supply line (7) can be closed or opened by means of the switching member (9) and a switching face (11) is arranged in the wall (13) of the first supply line (5) and can be subjected to the pressure in the first supply line (5).

2. Connection according to claim 1, **characterised in that** the switching member (9) comprises a switching face (11) which can be moved as a function of pressure and cooperates with the first supply line (5), a coupling member (17) cooperating with the switching face (11) and a switching element (19; 19'; 19'') actuable via the coupling member (17) and which opens and closes the second supply line (7) to the second consumer.

3. Connection according to claim 1 or 2, **characterised by** a restoring element (27) cooperating with the switching element (19; 19'; 19").

4. Connection according to any of the preceding claims, **characterised in that** it is arranged inside the pump (3) and/or is integrated therein.

5. Connection according to any of the preceding claims, **characterised in that** the coupling member (17) is provided on the switching face (11).

6. Connection according to any of the preceding claims, **characterised in that** the second supply line (7) branches from the first supply line (5), **in that** the switching face (11) is arranged in the region of the branching and the switching element (19; 19'; 19") is arranged in the second supply line (7).

7. Connection according to any of the preceding claims, **characterised in that** the switching element (19") is constructed in such a way that the switching face (11) is not subjected to the pressure prevailing in the second supply line (7) in the position of rest of the switching element (19").

8. Connection according to any of the preceding claims, **characterised in that** the pump (3) can be used as a vacuum pump and **in that** the switching element (19; 19") is constructed in such a way that it only opens beyond a predetermined vacuum in the first supply line (5).

9. Connection according to any of claims 1 to 7, **characterised in that** the pump (3) can be used as a feed pump, and **in that** the switching element (19'; 19") is constructed in such a way that it only opens above a predetermined excess pressure in the first supply line (5).

## Revendications

1. Raccord pour la connexion d'au moins deux consommateurs à une pompe (3), comportant un organe de commutation (9) pouvant être commandé par la pression exercée dans la première conduite d'alimentation (5) s'étendant depuis la pompe (3) jusqu'au premier consommateur, ledit organe pouvant être mis en communication active avec une seconde conduite d'alimentation (7) destinée au second consommateur, **caractérisé en ce que** la seconde conduite d'alimentation (7), par le biais de l'organe de commutation (9), peut être commandée afin de s'ouvrir ou de se fermer à partir d'une pression déterminée dans la première conduite d'alimentation (5) et **en ce qu'**une surface de commutation (11) est disposée dans une paroi (13) de la première conduite d'alimentation (5) et peut être exposée à la pression dans la première conduite d'alimentation (5).

2. Raccord selon la revendication 1, **caractérisé en ce que** l'organe de commutation (9) présente une surface de commutation (11) mobile en fonction de la pression coopérant avec la première conduite d'alimentation (5), une tige de couplage (17) coopérant avec la surface de commutation (11) et un élément de commutation (19 ; 19' ; 19") pouvant être actionné au moyen de ladite tige de couplage (17) et permettant d'ouvrir et de fermer la seconde conduite d'alimentation (7) en direction du second consommateur.

3. Raccord selon la revendication 1 ou 2, **caractérisé par** un élément de rappel (27) coopérant avec l'élément de commutation (19 ; 19' ; 19").

4. Raccord selon l'une des revendications précédentes, **caractérisé en ce qu'**il est disposé à l'intérieur de la pompe (3) et/ou est intégré dans cette dernière.

5. Raccord selon l'une des revendications précédentes, **caractérisé en ce que** la tige de couplage (17) est appliquée contre la surface de commutation (11).

6. Raccord selon l'une des revendications précédentes, **caractérisé en ce que** la seconde conduite d'alimentation (7) bifurque depuis la première conduite d'alimentation (5) et **en ce que** la surface de commutation (11) est située dans la zone de bifurcation et l'élément de commutation (19 ; 19' ; 19") est placé dans la seconde conduite d'alimentation (7).

7. Raccord selon l'une des revendications précédentes, **caractérisé en ce que** l'élément de commutation (19") est conçu de telle sorte que, dans la position de repos de l'élément de commutation (19"), la surface de commutation (11) n'est pas soumise à la pression exercée dans la seconde conduite d'alimentation (7).

8. Raccord selon l'une des revendications précédentes, **caractérisé en ce que** la pompe (3) peut être utilisée comme pompe à vide et **en ce que** l'élément de commutation (19 ; 19") est conçu de telle sorte qu'il ne s'ouvre qu'à partir d'une dépression prédéterminée dans la première conduite d'alimentation (5).

9. Raccord selon l'une des revendications 1 à 7, **caractérisé en ce que** la pompe (3) peut être utilisée comme pompe de refoulement et **en ce que** l'élément de commutation (19'; 19") est conçu de telle sorte qu'il ne s'ouvre qu'à partir d'une surpression prédéterminée dans la première conduite d'alimentation (5).
